# EUROPÄISCHE PATENTSCHRIFT

(11) **EP 2 658 931 B1**
(45) Veröffentlichungstag und Bekanntmachung des Hinweises auf die Patenterteilung: **31.07.2019**
(21) Anmeldenummer: 11831821.1
(22) Anmeldetag: 21.12.2011
(51) Int. Cl.: C09C 1/40, C09C 1/42, C01F 7/00, B82Y 30/00, C08K 9/02

(54) **VERFAHREN ZUR HERSTELLUNG VON NANOSKALIGEN, PRIMÄR GECOATETEN HYDROTALCIT UND HYDROTALCIT**
PROCESS FOR PRODUCING NANOSCALE, PRIMARY-COATED HYDROTALCITE AND HYDROTALCITE
PROCÉDÉ DE PRODUCTION D'HYDROTALCITE À PARTICULES NANOMÉTRIQUES ET À REVÊTEMENT PRIMAIRE ET HYDROTALCITE AINSI OBTENUE

(30) Priorität: 27.12.2010 DE 102010056030
(43) Veröffentlichungstag der Anmeldung: 06.11.2013
(73) Patentinhaber: K+S Aktiengesellschaft, 34131 Kassel (DE)
(72) Erfinder: BROD, Jochen, 36277 Wüstfeld (DE); GLENDE, David, Christopher, 37574 Einbeck (DE)
(74) Vertreter: Kröncke, Rolf
(86) Internationale Anmeldenummer: PCT/DE2011/002160
(87) Internationale Veröffentlichungsnummer: WO 2012/089197

(56) Entgegenhaltungen:
- EP-A1- 2 141 124
- EP-A2- 1 803 778
- WO-A1-92/17405
- DATABASE WPI Week 201049 Thomson Scientific, London, GB; AN 2010-J09435 & CN 101 735 532 A (SHANDONG HUIKE ADDITIVES CO LTD) 16 June 2010 (2010-06-16)

## Beschreibung

Die vorliegende Erfindung betrifft ein Verfahren zur Herstellung von gecoateten, nanoskaligen Hydrotalcit, wobei die einzelnen, primären, nanoskaligen Hydrotalcitpartikel gecoatet sind gemäß Anspruch 1. Dazu werden erfindungsgemäß in der Fällungsreaktion Additive eingesetzt, um die entsprechenden Hydrotalcitpartikel in gecoateter, nanoskaliger Form zu erhalten. Dabei weist jedes Primärpartikel sein eigenes Coating auf. In einem weiteren Aspekt richtet sich die Anmeldung auf gecoatete primäre, nanoskalige Hydrotalcitpartikel, insbesondere erhältlich gemäß dem erfindungsgemäßen Verfahren. Ein weiterer Aspekt der Erfindung richtet sich auf Komposite enthaltend nanoskalige Hydrotalcite, insbesondere Hydrotalcite hergestellt gemäß der vorliegenden Erfindung gemäß Anspruch 11.

### Stand der Technik

Es ist allgemein bekannt, dass Füllstoffe in Kunststoff zur Modifizierung der Eigenschaften dieser Kunststoffe als auch zur Kostenreduktion eingesetzt werden. Solche Füllstoffe können hinsichtlich ihrer Teilchengröße grobskalig als auch nanoskalig sein und werden meist als Pulver eingebracht.

Magnesiumhydroxid findet hierfür vielfältigste Anwendung in der Industrie. So wird z.B. Magnesiumhydroxid als flammhemmender Füllstoff in unterschiedlichsten Kunststoffen eingesetzt. Weiterhin werden entsprechende Magnesiumhydroxide in thermoplastischen oder duroplastischen Materialien als Füllstoff eingesetzt.

Auch Hydrotalcit findet als Füllstoff verschiedenartigste Anwendungen im Kunststoffbereich. Eine der bekanntesten Anwendungen für Hydrotalcit ist die Einnahme als Medikament gegen einen übersäuerten Magen. Andere Anwendungen von Hydrotalcit schließen den Einsatz als Flammhemmer, Katalysator, Speichermaterial für Schadstoffe bis hin zu Thixotropiemitteln für Kosmetikaprodukte ein. Besonders wichtig ist hierbei aber die Anwendung als Füllstoff und Flammhemmer, bei dem der Hydrotalcit grob- und nanoskalig zum Einsatz kommt. So werden Hydrotalcite als umweltfreundliche Stabilisierungsmittel in PVC beschrieben.

Grobskaliges Hydrotalcit wird im Folgenden als solches bezeichnet, das ein primäre Kristallgröße von > 0,1 µm aufweist. Nanoskaliges Hydrotalcit ist ein Hydrotalcit, das eine primäre Kristallgröße von ≤ 0,1 µm, nämlich im Bereich von 1 bis 100 nm aufweist.

Tatsächlich ist die industriell wichtigste und mengenmäßig größte Anwendung von Hydrotalcit die Verwendung als mineralischer Füllstoff für Kunststoffe, insbesondere für Polyvinylchlorid. Hierbei wird das Hydrotalcit bei der Herstellung von Polyvinylchlorid als Thermostabilisator eingesetzt. Dabei ersetzt das Hydrotalcit blei- und kadmiumhaltige Stabilisatoren. Ab 2015 soll bei der Herstellung von PVC ganz auf schwermetallhaltige Stabilisatoren verzichtet werden. Das Hydrotalcit wirkt dabei wie die schwermetallhaltigen Stabilisatoren als Säurefänger, eine Eigenschaft, die auch im pharmazeutischen Bereich genutzt wird. So wird von der Südchemie Hydrotalcit unter dem Produktnamen SorbAcid 911® vertrieben.

Nanoskaliges Hydrotalcit wird z.B. als Flammschutzmittel eingesetzt Die flammhemmende Wirkung von Hydrotalcit beruht dabei überwiegend auf der Abspaltung von Wasser. Des Weiteren verhindert der Brandrückstand aus Metalloxid den Gasaustäusch, was einen zusätzlichen flammhemmenden Effekt bewirkt; entsprechend werden Hydrotalcite als flammhemmende Mittel in verschiedene Polymere eingearbeitet, z.B. in Polystyrole, Polyamide und Polyolefine. Allerdings führt erst der Einsatz von nanoskaligem Hydrotalcit zu Polymeren, die auch in ihren mechanischen Eigenschaften ausreichend sind.

Hydrotalcite sind Verbindungen, die eine Struktur aufweisen, bei der positiv geladene Mischhydroxidschichten (Polykationen) bestehen, zwischen denen sich zum Ladungsausgleich Anionen befinden. Hydrotaicitverbindungen sind im Wesentlichen aus Magnesium als zweiwertiges Metallkation und Aluminium als dreiwertiges Metallkation ausgebildet. Üblicherweise liegen als Anionen OH bzw. CO₃ vor. Allerdings sind auch Hydrotaicitverbindungen bekannt, in denen weitere Kationen bzw. Anionen eingelagert sind. Diese Elemente umfassen Zink, Eisen, Kupfer, Nickel, Chrom, Scandium oder Kobalt. Als Anionen können vorliegen Karbonat, Sulfat, Hydroxid, Chlorid, Nitrat oder deren Gemische oder organische Anionen, wie Azetat, Benzoat oder Terephthalat.

Von der Fa. Axo Nobel wird das Produkt Perkalite vertrieben. Hierbei handelt es sich um ein Nanokomposit, das auf Hydrotalcit basiert und in dem OH<'>- Anionen teilweise durch andere organische Anionen ersetzt sind. Dieses Produkt soll verbesserte Eigenschaften als Nanofüllmittel insbesondere im Bereich des Flammschutzes aber auch der mechanischen Eigenschaften aufzeigen.

Partikel können in unterschiedlichster Art und Weise weiter modifiziert werden. So werden beim Coaten Partikel unterschiedlicher Geometrie, Größe und Dichte mit einem Additiv, üblicherweise einem organisches Additiv, überzogen. Dabei werden die Oberflächeneigenschaften definiert verändert. So kann durch Coaten eine ähnliche Polarität zwischen dem Polymer und dem Füllstoff erreicht werden. Dies erlaubt eine homogene Einarbeitung des mineralischen Füllstoffs in die organische Kunststoffmatrix.

Um an die Füllstoffoberfläche koppeln zu können, benötigen die organischen Substanzen zur Oberflächenmodifizierung meist ein oder mehrere anionische Gruppen.

Verschiedene Beschichtungsverfahren sind in der Literatur beschrieben. So beschreibt z.B. die EP 2 141 124 A1 ein Verfahren zur Herstellung von beschichteten Magnesiumhydroxidpartikeln. Die DE 10 2006 027 915 beschreibt Verfahren zur Herstellung von Magnesiumhydroxidnanopartikeln. Aus der DE 10 2005 025 719 A1 sind Verfahren zum Erzeugen einer Dispersion von desagglomerierten Bariumsulfat in Kunststoffen oder Kunststoffvorstufen bekannt.

EP 1 803 778 A2 beschreibt Partikel auf Hydrotalcitbasis, die mit organischen Verbindungen mit wenigstens 3 Kohlenstoffatomen oberflächenbehandelt sind.

WO 92/17405 A1 betrifft ein Verfahren zur Herstellung von zweischichtigen Hydroxidverbindungen. CN 101735532 A offenbart ein Verfahren zur Herstellung von hydrophoben Nanolychotalcit.

Der vorliegenden Erfindung liegt die Aufgabe zugrunde, neue Verfahren bereitzustellen, die eine Herstellung von gecoateten, nanoskaligen Hydrotalcitpartikel in hoher Ausbeute erlauben. Die so erhaltenen Hydrotalcite sollen verbesserte Eigenschaften als Füllstoffe in Kunststoffen aufweisen, insbesondere die mechanischen Eigenschaften dieser so hergestellten Kompositematerialien sollen verbessert sein.

Eine weitere Aufgabe der vorliegenden Erfindung ist die Bereitstellung von solchen nanoskaligen primär gecoateten Hydrotalcitpartikeln sowie Zusammensetzungen umfassend Magnesiumhydroxid und Hydrotalcit.

### Ausführliche Beschreibung der Erfindung

In einem ersten Aspekt richtet sich die vorliegende Erfindung auf ein Verfahren gemäß Anspruch 1 zur Herstellung von nanoskaligen Hydrotalcit mit dem Schritt des Inkontaktbringens i) einer Magnesium-Salzlösung mit ii) einer Aluminium-Salzlösung unter Bildung eines Reaktionsgemisches zur Fällung von gecoateten Hydrotalcit nach Zugabe von Natriumcarbonat und Natronlauge, dadurch gekennzeichnet, dass in mindestens eine der Lösungen i) oder ii) mindestens eine der folgenden Additive A und/oder B gegebenenfalls in Kombination mit dem Additiv C enthalten ist oder bei Inkontaktbringen von i) und ii) mindestens eines der folgenden Additive A und/oder B gegebenenfalls in Kombination mit dem Additiv C gleichzeitig mit dem sich aus i) und ii) ergebenen Reaktionsgemisch in Kontakt gebracht wird, wobei Additiv A ein Wachstumsinhibitor mit mindestens zwei oder mehr anionischen Gruppen ist, wobei das Additiv B ein Dispergiermittel mit mindestens zwei oder mehr anionischen Gruppen ist und Additiv C eine wässrige Fettsäurelösung, bevorzugt eine Stearatlösung, ist.

Die mit dem erfindungsgemäßen Verfahren erhältlichen nanoskaligen Hydrotalcitpartikel zeichnen sich dadurch aus, dass sie bereits während des Fällungsprozesses aufgrund des Vorhandenseins der oben genannten Additive ein Coating der Oberfläche erhalten. Dadurch wird eine elektrostatische und sterische Stabilisierung der einzelnen Primärpartikel erreicht und eine zu starke Reagglomeration der Partikel gehemmt. Die Polarität der Partikel wird durch entsprechend geeignete Additive verändert und bevorzugt an die Polarität der polymeren Zielmatrix angepasst.

Die so hergestellten nanoskaligen gecoateten Hydrotalcitpartikel, die erfindungsgemäß als wässrige Suspension oder Dispersion vorliegen können, eignen sich hervorragend zur Weiterverarbeitung in Kompositen. Der Ausdruck "nanoskalig" bedeutet Teilchengrößenverteilungen, deren mittlerer Partikeldurchmesser (d50) ≤ 100nm ist. D.h. Partikel, bei denen zu größer 50%, wie größer 70%, 80%, insbesondere größer 90%, wie 95% und insbesondere 98% der Partikeldurchmesser ≤ 100 nm ist, werden als nanoskalige Partikel bezeichnet.

Unter dem Ausdruck "grobskalig" werden solche Hydrotalcite bezeichnet, die eine Kristallgröße der Primärpartikel von > 0,1 µm aufweisen.

Die erfindungsgemäß bei der Fällung einsetzbaren Additive sind dabei ein Wachstumsinhibitor A (Additiv A), ein Dispergiermittel B (Additiv B), eine wässrige Fettsäurelösung, insbesondere eine wässrige Stearat-Lösung C (Additiv C) oder Mischungen davon.

Als Wachstumsinhibitor A können im Stand der Technik bekannte Wachstumsinhibitoren, wie sie z.B. in der DE 103 57 116 A1 beschrieben sind, eingesetzt werden.

Der Wachstumsinhibitor A zeichnet sich dadurch aus, dass er mindestens zwei oder mehr anionische Gruppen aufweist. Bevorzugt enthält der Inhibitor als anionische Gruppe mindestens zwei der folgenden Gruppen: eine Sulfat-, eine Sulfonat-, eine Phosphonat-, oder eine Phosphatgruppe, bevorzugt mindestens zwei identische dieser Gruppen. Diese anionischen Gruppen erlauben eine anionische Kopplung des Additivs mit der Oberfläche des Hydrotalcitpartikels. Alternativ können auch zwei verschiedene anionische Gruppen vorliegen.

Bei den Wachstumsinhibitoren A kann es sich um Monomere, Oligomere oder Polymere handeln. Natürlich können die Wachstumsinhibitoren auch Kombination von zwei oder mehreren der oben genannten Gruppen aufweisen.

Der Wachstumsinhibitor A kann auch als Salz dieser Verbindung eingesetzt werden, wobei die mehrere, anionische Gruppen enthaltende und aus hydrophoben und/oder hydrophilen Teilstrukturen bestehende Hauptkette auch verzweigt und/oder zyklisch sein kann. Des Weiteren können Heteroatome (Stickstoff, Sauerstoff, Schwefel oder Phosphor) in dieser Hauptkette eingebaut sein.

Die Wachstumsinhibitoren A können in funktionalisierter Form vorliegen, das heißt sie können ein oder mehrere reaktive Endgruppen enthalten, z.B. Hydroxygruppen. Diese können später als funktionelle Gruppe mit einem Polymer wechselwirken und z.B. kovalente Bindungen ausbilden. Beispielhaft seien hier die kovalenten Bindungen genannt, die sich zwischen OH-Gruppen und einem Diisocyanat unter Bildung eines Polyurethans ausbilden.

Solche funktionalisierten Wachstumsinhibitoren A sind z.B. hydroxysubstituierte Carbonsäureverbindungen, wie hydroxysubstituierte Mono- und Dicarbonsäuren mit 1 bis 20 Kohlenstoffatomen, z.B. Zitronensäure, Apfelsäure, Dihydroxybernsteinsäure und 2-Hydroxyölsäure. Besonders geeignet sind Polyacrylate.

Entsprechend gut geeignet sind auch Phosphorsäureacrylverbindungen mit 1 bis 10 Kohlenstoffatomen, die ggf. weitere Hydroxygruppen aufweisen.

Alternativ können auch Verbindungen eingesetzt werden, die weiterhin Stickstoffatome enthalten. Geeignete Verbindungen sind unter anderem Polyaminoverbindungen, wie Polyasparaginsäuren.

Solche reaktiven Gruppen können weiterhin Doppelbindungen, Hydroxy-, Amin, und Thiolgruppen sein.

Die Menge an Wachstumsinhibitor A kann variieren. Üblicherweise werden Mengen von 0,1 bis 30 Mas%, wie bis 20 Mas% bezogen auf den Feststoffgehalt an Hydrotalcit eingesetzt. Die Menge kann aber auf bis zu 50 Mas% erhöht werden, insbesondere dann, wenn zusätzlich ein Dispergiermittel B und/oder Stearat C vorhanden sind.

Typische Beispiele von Wachstumsinhibitoren A sind Natrium-Citrat/ Zitronensäure, Polyacrylate, z.B. Sokalan® PA 20, Dispex® N40 von Ciba-Geigy oder Polyphosphate, z.B. Calgon® N.

Das Dispergiermittel B weist ähnlich dem Wachstumsinhibitor A mindestens zwei oder mehr anionische Gruppen in seinem Molekül auf. Auch kann es als Monomer, Oligomer oder als Polymer vorliegen. Das Dispergiermittel B kann auch als Salz dieser Verbindung eingesetzt werden, wobei die mit einer oder mehreren anionischen Gruppen enthaltende Hauptkette auch verzweigt oder zyklisch sein kann. Sie weisen entsprechend hydrophobe und/oder hydrophile Teilstrukturen auf. diese eine oder mehrere im Oligomer oder Polymer vorliegende(n) anionische(n) Gruppe(n) kann/können unter anderem Carboxy-, Phosphonat-, Phosphat-, Sulfonat- oder Sulfatgruppen sein, die eine anionische Kopplung des Dispergiermittels B auf der Hydrotalcitoberfläche bewirken. Neben den genannten anionischen Gruppen können weitere Haupt- und ggf. zusätzliche Seitenketten im Molekül des Dispergiermtitels B vorhanden sein, diese können die entstehenden Partikel elektrostatisch und/oder sterisch stabilisieren und somit eine Reagglomeration hemmen. Die Dispergiermittel B erlauben weiterhin die entstandene Hydrotalcitsuspension bzw. -dispersion zu stabilisieren, um so lagerstabile Suspensionen bzw. Dispersionen zu erhalten. Die Dispergiermittel B verleihen dem Partikel außerdem eine äußere Polarität, die entsprechend der Auswahl des Dispergiermittels dem Partikel hydrophobere oder hydrophilere Eigenschaften verleihen und dadurch die Polarität dieser Partikel dahingehend beeinflusst, dass sie zur späteren Verwendung in z.B. einer Polymermatrix besser verwendbar sind und eine Agglomeration im Polymer verhindert bzw. die Desagglomerisation in der Matrix fördert. Dadurch können diese Hydrotalcitpartikel, bevorzugt nanoskalige Hydrotalcitpartikel, in desagglomerierter Form homogen verteilt in der Polymermatrix vorliegen.

Neben den genannten anionischen Gruppen kann das Dispergiermittel B weiterhin reaktive Endgruppen enthalten und somit funktionalisiert sein. Diese funktionalisierten Gruppen umfassen Hydroxygruppen aber auch Doppelbindungen, Amin- und Thiolgruppen. Mit Hilfe dieser funktionellen Gruppen kann eine spätere kovalente Verknüpfung mit einem Polymer erfolgen, ähnlich wie für die oben beschriebenen Wachstumsinhibitoren A.

Das Dispergiermittel B weist eine gute Wasserlöslichkeit auf, da dieses erfindungsgemäß entweder in der Magnesium-Salzlösung oder der Aluminium-Salzlösung vorliegt, oder zumindest gleichzeitig bei der in-situ-Fällung zu dem Reaktionsgemisch dieser beiden Lösungen hinzugefügt wird.

Geeignete Dispergiermittel B, die in wässrigen Lösungsmitteln verwendet werden können, umfassen Polyacrylate, wie z.B. Sokalan® PA (BASF), Polyethercarboxylate, wie z.B. Melpers® 0030 (BASF), Phosphorsäureester, wie z.B. Disperbyk® 102 (Byk-Chemie), oder Polyphosphate, wie z.B. Calgon® N oder hochmolekulare Polymere mit füllstoffaffinen Gruppen, z.B. als Blockcopolymer vorliegend, wie z.B. Disperbyk® 190.

Der Wachstumsinhibitor A kann gleichzeitig ein Dispergiermittel B sein, z.B. im Fall von Dispex® N40 (Ciba).

Die Menge des Dispergiermittels B kann variieren. Üblicherweise liegt das Dispergiermittel B in dem Reaktionsgemisch in einer Menge von 0, 1 bis 30 Mas%, bevorzugt 0,1 bis 20 Mas% bezogen auf den Feststoffgehalt an Hydrotalcit vor. Wird nach dem erfindungsgemäßen Ausfällen eine weitere Bearbeitung mittels Ultraschall oder Perlmahlung durchgeführt, so ist die dabei aufzuwendende Energie geringer im Vergleich zu einem herkömmlichen mechanischen Zerkleinerungsprozess, da hier lediglich eine Desagglomeration lockerer Agglomerate durchgeführt werden muss und nicht ein mechanisches Aufbrechen von Kristallen.

Das Dispergiermittel B wird in dem erfindungsgemäßen Verfahren insbesondere dann eingesetzt, wenn eine lagerstabile Suspension oder Dispersion erhalten werden sollen. Insbesondere, wenn die erhaltenen gecoateten Hydrotalcitpartikel direkt weiterverarbeitet werden sollen, z.B. in ein thermoplastisches Polymer eingearbeitete werden soll, wird eine Ausfällung des Hydrotalcits bei Vorhandensein des Dispergiermittels B durchgeführt.

Als Additive C sei die Gruppe der Fettsäuren genannt. Diese können sowohl geradlinig als auch verzweigt, gesättigt, einfach oder mehrfach ungesättigt und mit unterschiedlichen Alkylkettenlängen (niedere, mittlere und höhere Kettenlängen) vorliegen. Nachfolgend sei als Beispiel für dieses Additiv C das Stearat genannt.

Die Stearat-Lösung ist eine wässrige Stearat-Lösung, z.B. eine Natrium- oder Kaliumstearat-Lösung. Das Stearat kann in fester Form zu der wässrigen Vorlage im Reaktor vorgelegt werden, und ist somit bei der Fällung in gelöster Form anwesend. Aufgrund seiner Carboxygruppe als anionische Gruppe umhüllt das Stearat die sich bei der Fällung bildenden Primärpartikel des Hydrotalcits und coatet diese entsprechend. Das Stearat selbst hat üblicherweise keinen Einfluss auf die Primärkristallgröße der sich bildenden Primärpartikel des Hydrotalcits. Obwohl das Stearat selbst keine sterische Stabilisierung der Partikel in wässrigen Lösungen erlaubt, zeigen die sedimentierten lockeren Hydrotaicitagglomerate ein verbessertes Desagglomerierungsverhalten bei der weiteren Verarbeitung im organischen Medium. Das heißt, das Coaten der Primärpartikel mit Stearat ermöglicht den Erhalt von Suspensionen oder Dispersionen von einzeln gecoateten Hydrotalcitpartikeln. Selbst nach Trocknung der Suspensionen bzw. Dispersionen zeigen die dann vorliegenden Agglomerate der gecoateten Hydrotalcitpartikel verbesserte Desagglomerierungseigenschaften.

Die Menge an eingesetztem Natriumstearat kann variieren. Sie liegt im Bereich von 0,1 bis 10 Mas% bezogen auf den Feststoffgehalt an Hydrotalcit.

Die genannten Additive können auch als Mischungen eingesetzt werden. Bevorzugt wird z.B. eine Mischung einer wässrigen Stearat-Lösung C und eines Wachstumsinhibitors A als Coating für die Primärpartikel des Hydrotalcits. Dabei liegen die Mengen an eingesetztem Stearat und Wachstumsinhibitor A in den oben genannten Bereich, bevorzugt liegen sie in Bereichen von 0,1 bis 10 Mas% bezogen auf den Feststoffgehalt an Hydrotalcit im Reaktionsgemisch.

Die Additive können dabei getrennt oder zusammen zum Reaktionsgemisch in Form einer wässrigen Lösung hinzugefügt werden. Alternativ können die Additive A und B zusammen oder getrennt in einer der Ausgangslösungen Aluminiumsalz bzw. Magnesiumsalzlösung) vorliegen.

Es ist bevorzugt, dass als Additiv ein Dispergiermittel B in der Reaktionsmischung vorliegt, bevorzugt eine Menge von 0,1 bis 30 Mas% bezogen auf den Feststoffgehalt an Hydrotalcit.

Weiterhin ist bevorzugt, dass die Reaktionsmischung zusätzlich oder alternativ den Wachstumsinhibitor A in einer Menge von 0, 1 bis 30 Mas% bezogen auf den Feststoffgehalt an Hydrotalcit und/oder Fettsäure bevorzugt in einer Menge von 0,1 bis 10 Mas% bezogen auf den Feststoffgehalt an Hydrotalcit, enthält.

Mit dem erfindungsgemäßen Verfahren ist es möglich, dass jeder einzelne Hydrotalcitpartikel gecoatet ist. Entsprechend sind solche einzelnen gecoateten Hydrotalcitpartikel bevorzugt.

Bei dem Verfahren werden bevorzugt solche nanoskaligen Hydrotalcitpartikel hergestellt, die mindestens zu 90% der einzelnen Partikel einen Durchmesser von ≤ 100 nm aufweisen.

In einer weiteren bevorzugten Ausführungsform weisen das erfindungsgemäße Hydrotalcit weitere zweiwertige Metalle, insbesondere Zn²⁺, auf.

Als weitere Anionen können in den Hydrotalcit insbesondere solche vorliegen ausgewählt aus Sulfat, Chlorid, insbesondere solche vorliegend ausgewählt aus Sulfat, Chlorid, Nitrat oder deren Gemische.

Es ist insbesondere bevorzugt, dass das erfindungsgemäß hergestellte Hydrotalcit eines ist der allgemeinen Formel

Mg₆Al₂(OH)₁₆CO₃ • 4H₂O

In dem erfindungsgemäßen Verfahren wird bevorzugt das Inkontaktbringen der Magnesiumsalzlösung mit der Aluminiumsalzlösung bei Temperaturen von 0 bis 90°C, insbesondere oberhalb von 50°C bis 80°C, durchgeführt.

Das erfindungsgemäße Verfahren funktioniert dabei analog zu dem Verfahren von Kyowa, DE 15 92 126 C1, das ein synthetisches Hydrotalcit und Verfahren zu dessen Herstellung betrifft.

Zusätzlich zu den im oben genannten Patent beschriebenen Schritten wird erfindungsgemäß zusätzlich eins der Additive A und/oder B gegebenenfalls in Kombination mit dem Additiv C, wie hierin definiert. Durch Zugabe der Additive ist es möglich nanoskaliges, gecoatetes Hydrotalcit herzustellen. Gemäß der DE 15 92 126 C1 findet die Synthese derart statt, dass eine Aluminiumverbindung mit einer Magnesiumverbindung in einem basischen Medium in Gegenwart von Carbonationen vermischt wird, die Reaktion findet dabei bei einem pH-Wert von mindestens 8 unter Umgebungsdruck und Temperaturen von 0°C bis 150°C statt.

Die Konzentration des Magnesiumsalzes in dieser wässrigen Lösung ist bevorzugt dabei in einem Bereich von 1 bis 33 Mas%.

Als Aluminiumsalzlösung können verschiedene Aluminiumsalze eingesetzt werden. Übliche Aluminiumsalze schließen ein lösliche Aluminate oder wasserlösliche Aluminiumsalze. Bevorzugt werden Aluminiumsulfat- oder Aluminiumchloridlösungen verwendet. Als Magnesiumlösung wird insbesondere bevorzugt eine Magnesiumchloridlösung eingesetzt.

In einer besonders bevorzugten Ausführungsform wird das Verfahren mit einer 33 Mas% Magnesiumchloridsalzlösung durchgeführt. Das Verhältnis von Magnesium zu Aluminium beträgt 0,66 bis 8 zu 1. Bevorzugt beträgt das Verhältnis 3 zu 1.

So wird die Magnesiumsalzlösung und die Aluminiumsalzlösung in Wasser gelöst als Lösung 1 vorgelegt. Zu dieser Lösung wird die Lösung 2, eine Alkalthydroxidlösung zum Erhöhen des pH-Wertes hinzugefügt. Diese Lösung ist insbesondere eine, die weiterhin ein Alkalikarbonat enthält. Besonders bevorzugt ist diese Lösung eine aus Natriumhydroxid und Natriumcarbonat.

Mit Hilfe des erfindungsgemäßen Verfahrens ist es möglich nanoskalige Hydrotalcit mit verbesserten Eigenschaften als gecoatete nanoskalige Hydrotalcit-Primärpartikel bereitzustellen.

In einem weiteren Aspekt richtet sich die vorliegende Anmeldung daher auf gecoatete primäre nanoskalige Hydrotalcitpartikel, die mit einem erfindungsgemäßen Verfahren erhältlich sind.

Diese gecoateten primären nanoskaligen Hydrotalcitpartikel sind solche, die zu mindestens 90%, bevorzugt mindestens 95%, besonders bevorzugt mindestens 99% der Partikel einen Durchmesser von ≤ 100nm aufweisen.

Die erfindungsgemäßen gecoateten primären nanoskaligen Hydrotalcitpartikel sind in einer bevorzugten Ausführungsform des weiteren solche, die Partikel mit einer BET-Oberfläche von ≥ 50m²/g aufweisen, insbesondere ≥ 70m²/g. insbesondere bevorzugt weisen die Partikel eine BET-Oberfläche von ≥ 100m²/g auf.

Die erhaltenen Suspensionen bzw. Dispersionen von Hydrotalcit können als solche weiterverarbeitet werden, oder anschließend getrocknet werden, z.B. durch Sprühtrocknung.

Die bei einer Verwendung einer Kombination von Fettsäurederivat-Lösung C und Wachstumsinhibitor A und/oder Additiv B erhaltenen Agglomerate von Hydrotalcit lassen sich leicht desagglomerieren und weiterverarbeiten.

Durch Verwendung der Additive, wie Additiv B oder insbesondere des Wachstumsinhibitors A in Kombination mit dem Stearat C liegen die Primärpartikel dabei in einem nanoskaligen Bereich vor, so dass nanoskalige, gecoatete Hydrotalictpartikel erhalten werden.

Dabei werden gecoatete, nanoskalige Hydrotalcitpartikel erhalten, die aufgrund des Vorhandenseins des sterisch stabilisierenden Dispergiermittels B als desagglomerierte Partikel in der Dispersion vorliegen. Diese Dispersion kann direkt weiterverarbeitet werden.

Wie bereits allgemein zu den Additiven ausgeführt, können die Additive Wachstumsinhibitor A und/oder Dispergiermittel B in funktionalisierter Form eingesetzt werden. Diese beiden funktionalisierten Additive, die als Coating auf den Primärpartikel des Hydrotalcits vorhanden sind, bewirken nach der Einarbeitung des Füllstoffes eine signifikante Verbesserung der mechanischen Eigenschaften der polymeren Werkstoffe.

Wenn notwendig, kann der pH-Wert des Reaktionsgemisches bei der Fällung oder der anschließend erhaltenen Lösung an gecoateten nanoskaligen Hydrotalcitpartikeln mit geeigneten Säuren oder Basen auf die gewünschten Werte eingestellt werden.

Durch das Anpassen der Polarität von Wachstumsinhibitor A und Dispergiermittel B an die Polarität des fertigen Polymers kann die Einarbeitung der erhaltenen Hydrotalcitpartikel als Füllstoff in Monomeren, Oligomeren und Polymeren durch eine leichtere Benetzbarkeit der Partikel signifikant verbessert werden.

Die mit dem erfindungsgemäßen Verfahren erhältlichen Hydrotalcitpartikel weisen bei Zugabe von Wachstumsinhibitor A mindestens 90%, bevorzugt mindestens 95%, wie mindestens zu 98%, besonders bevorzugt mindestens zu 99%, insbesondere zu 100% einen Durchmesser von < 1.000nm, bevorzugt < 500nm, insbesondere bevorzugt < 100nm, insbesondere bevorzugte < 50nm auf.

Insbesondere durch den Einsatz des Wachstumsinhibitors A ist es möglich, die Primärpartikelgröße der Hydrotalcitpartikel zu steuern. Das heißt, je größer die Menge an Wachstumsinhibitor A, umso geringer ist der durchschnittliche Partikeldurchmesser der erhaltenen Primärpartikel.

Korrespondierend zu der Primärpartikelgröße weisen die mit dem erfindungsgemäßen Verfahren erhältlichen Primärpartikel des Hydrotalcits unter Zugabe von Wachstumsinhibitor A eine BET-Oberfläche von mindestens 50m²/g, bevorzugt ≥ 70m²/g, wie ≥ 100m²/g und ganz besonders bevorzugt ≥ 120m²/g auf. insbesondere die Zugabe des Wachstumsinhibitors A erlaubt eine Erhöhung der spezifischen Oberfläche (BET) der ausgefällten Hydrotalcitpartikel. Dabei ist festzustellen, dass z.B. je höher die Menge an Wachstumsinhibitor A in der Reaktionsmischung ist, umso höhere spezifische Oberflächen (BET) sind erhältlich.

Ein wesentliches Merkmal des erfindungsgemäßen Verfahrens ist die Fähigkeit, die Primärpartikel einzeln zu coaten, das heißt die in der Suspension bzw. Dispersion vorliegenden grob- oder nanoskaligen Primärpartikel sind einzeln mit den zugefügten Additiven vollständig beschichtet.

In einem weiteren Aspekt richtet sich die vorliegende Anmeldung auf Komposite, enthaltend Hydrotalcit erhältlich nach einem der erfindungsgemäßen Verfahren oder enthaltend erfindungsgemäßes Hydrotalcit.

Bei den Kompositen handelt es sich insbesondere um solche hergestellt aus einem Kunststoff wie aus Polyvinylchlorid, und Hydrotalcit als Füllstoff.

In einer weiteren bevorzugten Ausführungsform ist das Komposit eines aus einem Kunststoff, wie insbesondere Polyvinylchlorid, in Kombination mit einem Gemisch aus Hydrotalcit und Magnesiumhydroxid als Füllstoff.

Es könnte gezeigt werden, dass durch den Einsatz von Hydrotalcit die Eigenschaffen des Komposits gegenüber Kompositen mit kommerziell erhältlichen Hydrotalcit verbessert werden konnten. Darüber hinaus zeigte sich, dass die Herstellung der Komposite vereinfacht werden kann. So konnte die Extrusion der Komposite vereinfacht durchgeführt werden. Die Extrusionstemperatur konnte z. B. deutlich verringert werden. Dadurch werden die einzelnen Bestandteile des Komposits nicht so stark in Mitleidenschaft gezogen, z.B. thermisch zerstört werden, und die Materialeigenschaften des Komposits sind verbessert. Die erfindungsgemäßen Komposite enthaltend einen Kunststoff und erfindungsgemäß hergestelltes Hydrotalcit weisen gegenüber bekannten Kompositen eine verbesserte Bruchdehnung und eine verbessert Schlagzähigkeit auf. Die Polymerschmelze weist bei der Herstellung eine verringerte Viskosität auf. Diese Eigenschaften sind in den beigefügten Beispielen noch einmal dargestellt. Des Weiteren weist das nanoskalige Hydrotalcit gemäß der vorliegenden Erfindung, insbesondere nanoskaliges Hydrotalcit mit einem Dispergiermittel B, wie z. B. das Byk 102®, hohe spezifische Oberflächen und somit kleine Primärpartikel auf.

Die erfindungsgemäßen Komposite von PVC mit Hydrotalcit werden zum Beispiel für die Herstellung von Kabelkanälen und vielen Gebrauchsgegenständen (Rolladenlamellen, etc) verwendet,

Weiterhin folgt aus der Verwendung der erfindungsgemäßen Komposite dass der Anteil an Magnesiumhydroxid in flammgeschützten Kunststoffen von üblichen 60 Mas% an groben Magnesiumhydroxid auf rund 40 Mas% MgOH₂ und rund 10 Mas% nanoskaliges Hydrotalcid verringert werden kann, wobei die Zuordnung zur höchsten Brandschutzklasse (z.B. UL94 V0) erhalten bleibt. Durch die Verringerung des Füllstoffgehaltes verbessert sich die Mechanik des Komposits deutlich.

Weiterhin richtet sich die vorliegende Anmeldung auf Verfahren zur Herstellung dieser Komposite, insbesondere durch Extrusionsverfahren. Das erfindungsgemäße Verfahren zur Herstellung der Komposite umfasst dabei das Vermischen von Kunststoff, insbesondere Polyvinylchlorid, mit Hydrotalcit hergestellt gemäß dem erfindungsgemäßen Verfahren bzw. unter Verwendung des erfindungsgemäßen Hydrotalcits.

Schließlich werden Zusammensetzungen enthaltend 1 bis 60 Mas% MgOH₂, vorzugsweise 40 bis 60 Mas% MgOH₂ und 1 bis 20 Mas% Hydrotalcit, insbesondere 10 bis 20 Mas% Hydrotalcit, bezogen auf die Gewichtsanteile des Komposits beschrieben. Bei dem Hydrotalcit handelt es sich insbesondere um ein Hydrotalcit hergestellt nach einem der erfindungsgemäßen Verfahren.

Diese Zusammensetzung aus Magnesiumhydroxid und dem erfindungsgemäßen Hydrotalcit erlaubt die Reduktion der verwendeten Mengen an Magnesiumhydroxidfüllstoffen in Kompositen. D. h. diese Zusammensetzungen weisen verbesserte Eigenschaften auf, als Komposite, in denen reines Magnesiumhydroxid als Füllstoff eingesetzt wird.

Durch Kombination von Magnesiumhydroxid mit erfindungsgemäßen Hydrotalcit ist es möglich, die eingesetzte Menge an Füllstoff in dem Komposit zu reduzieren ohne die mechanischen Eigenschaften des Komposits zu verschlechtern: Bevorzugt werden die mechanischen Eigenschaften des Kunststoffs deutlich verbessert.

Diese Zusammensetzungen sind insbesondere zum Einsatz in Kompositen zum Flammschutz geeignet (UL94 V0).

Die Erfindung wird mit Hilfe von Beispielen weiter dargestellt. Diese Beispiele dienen zur weiteren Erläuterung der Erfindung ohne sie hierauf zu begrenzen.

### Beispiel 1

### Herstellung von Hydrotalcit

### Versuche unter Verwendung von Coating-Additiven

Im Rahmen dieser Versuchsreihe wurden drei Additive getestet. Zum Einsatz kamen zwei Additive der Firma Byk-Chemie (DISPERBYK®-102 u. DISPERBYK®-190) und ein Additiv des Herstellers Ciba (Dispex N40). Alle drei Versuche wurden bei hohen Volumenströmen und Raumtemperatur durchgeführt. Das Konzentrationsverhältnis entsprach dem des Kyowa-Patents, DE15 92 126 C1, (s. Fussnote Tab.1). Die Menge des Additivs, das in den Versuchen eingesetzt wurde, betrug ca. 5 Mas% bezogen auf die Ausbeute an Hydrotalcit (ca. 50g), das bei den Versuchen entstand. Das eingesetzte Additiv wurde gemeinsam mit den 200ml destillierten Wasser in das Reaktionsgefäß vorgelegt. Die einzelnen Einwaagen und Parameter sind in Tabelle 1 aufgeführt.

**Tabelle 1: Darstellung der Laborversuche 1 bis 2 mit Coating-Additiv Byk**

| Versuch-Nr. | 1 | 2 |
|---|---|---|
| Konzentration. | 2* | 2* |
| Additiv | Byk-102 | Byk-190 |

| Lösung 1 | | |
|---|---|---|
| MgCl₂-Losung (33%) [g] | 172.73 | 172.73 |
| AlCl₃x6 H₂O [g] | 48,16 | 48,16 |

| Lösung 2 | | |
|---|---|---|
| NaOH [g] | 40,00 | 40,00 |
| Na₂CO₃x10 H₂O [g] | 94,44 | 94,44 |
| **Reaktionstemperatur [°C o. RT]** | RT | RT |
| **Volumenstrom [ml/min]** | 33,22 (Flow80) | 33,22 (Flow80) |
| **Rührerdrehzahl [U/min]** | 300 | 300 |
| **Nachrührzeit [min]** | 15 | 15 |
| **Vorlage (Reaktor)** | 200ml dest. H₂O + 2,45g Additiv | 200ml dest. H₂O + 2,45g Additiv |
| **pH-Wert (Reaktionsende)** | 8,12 | 8,40 |
| **Ausbeute [%]** | 81,48 | 80,16 |
| **Hydrotalcit-Phase** | ja | ja |
| | | |

| [ja / nein] | | |
|---|---|---|
| spez. Oberfläche [m²/g] | 127,42 | 73,94 |

| | | |
|---|---|---|
| 2*: Konzentration in Anlehnung an das Kyowa-Patent, DE 15 92 126 C1 (MgCl₂: 0.6 mol/l, AlCl₄: 0,2 mol/l, NaOH: 0.1 mol/l, Na₂CO₃. 0.33 mol/l) RT: Raumtemperatur Flow80. Einstellung an der Ismatec-Schlauchpumpe Hydrotalcit-Phase: Bestaligung durch Röntgendiffraktometrie-Analyse | | |

Im folgenden Versuch (s. Tab.2) wurde als Additiv o.g. Dispex N40 verwendet.

**Tabelle 2: Darstellung mit Coating-Additiv Dispex**

| **Versuch-Nr.** | 3 |
|---|---|
| **Konzentration** | 2* |
| **Additiv** | Dispex N40 |

| **Lösung 1** | |
|---|---|
| MgCl₂-Losung (33%) [g] | 172,73 |
| AlCl₃x6 H₂O [g] | 48.16 |

| **Lösung 2** | |
|---|---|
| NaOH [g] | 40,00 |
| Na₃CO₃x10 H₂O [g] | 94,44 |
| **Reaktionstemperatur [°C o. RT]** | RT |
| **Völumenstrom [ml/min]** | 33,22 (Flow80) |
| **Rührerdrehzahl [U/min]** | 300 |
| **Nachrührzeit [min]** | 15 |
| **Vorlage (Reaktor)** | 200ml dest. H₂O + 2,45g Additiv |
| **pH-Wert (Reaktionsende)** | 8,27 |
| **Ausbeute [%]** | 80,32 |
| **Hydrotalcit-Phase [ja / nein]** | Ja |
| **spez. Oberfläche [m²/g]** | 70,21 |

| | |
|---|---|
| 2*: Konzentration in Anlehnung an das Kyowa-Patent. s. Fussnote Tab. 1 RT: Raumtemperatur Flow80: Einstellung an der Ismatec-Schlauchpumpe Hydrotalcil-Phase : Bestätigung durch Röntgendiffraktometrie-Analyse | |

### Versuche in der Technikumsanlage

Die angegebenen Mengen sind auf eine theoretische Ausbeute von 1000 kg Produkt bezogen. Die Ausbeuten bei den Laborversuchen lagen bei ca. 81 %.

**Versuche 4-5 (In Anlehnung an Kyowa-Schutzrecht):**

| Lösung 1 | | Lösung 2 | |
|---|---|---|---|
| MgCl₂-Lsg. 33% | AlCl₃ x 6 H2O | NaOH-Lsg. 25% | Na₂CO₃ |
| 2858,4 kg | 796,9 kg | 2647,8 kg | 579,2 kg |

**Versuche 6-7:**

| Lösung 1 | | | Lösung 2 | | |
|---|---|---|---|---|---|
| MgCl₂-Lsg. 33% | AlCl₃ x 6 H2O | H₂O | NaOH-Lsg. 25% | Na₂CO ₃ | H₂O |
| 2860,9 kg | 797.7 kg | 3297,9 kg | 2650,10 kg | 579,7 kg | 1726,7 kg |

Es wurden in den o.g. Versuchen 6 und 7 BET Werte von 63 bis 67 m²/g erhalten. Zum Vergleich: Die BET-Werte betragen bei dem Produkt Alcamizer von Kisuma rund 8 -10 m²/g (kisuma.com/alcamizer.html).

### Beispiel 3

### Herstellung von PVC Komposite

Die aus diesen Versuchen erhaltenen Produkte wurden unter Nutzung der allgemein üblichen Verfahren bei der Herstellung der Kompositmaterialien verwendet. Die verwendete Rezeptur ist in Tab. 3 dargestellt.

**Tab. 3 Rezeptur für die Herstellung der Kompositmaterialien**

| **Produkt** | **KKS 16** | **KKS 17** | **CaZn-Standard** |
|---|---|---|---|
| PVC SH 6830 | 100 | 100 | 100 |
| Sorbacid 911 | 0,8 | - | - |
| Hydrotalcit gemäß der vorliegenden Erfindung | - | 0,8 | - |
| Calciumstearat | 0,8 | 0,8 | - |
| Zinkstearat | 0,8 | 0,8 | - |
| Rhodiastab 55 | 0,2 | 0,2 | - |
| Mark CZ 2000 | - | - | 2,5 |
| Marklube 367 | 0,5 | 0,5 | 0,5 |
| Paraloid K 125 | 1 | 1 | 1 |
| Licowax PE 520 | 0,2 | 0,2 | 0,2 |
| Loxiol G 60 | 0,6 | 0,8 | 0,8 |
| Kronos 2220 | 4 | 4 | 4 |
| Hydrocarb 95 T | 5 | 5 | 5 |

| | | | |
|---|---|---|---|
| Alle Angaben in Teilen ! KKS 16 = Vergleichsprodukt, Sorbacid 911, Süd-Chemie KKS 17 = Komposit, mit Byk-102, s. Vers. 1 | | | |

Bei den Versuchen zeigte sich überraschenderweise, dass die Viskosität der geschmolzenen Polymermasse wesentlich geringer als erwartet war. Als Folge konnte die Extrudertemperatur von 200°C (mit Konkurrenzprodukt) auf 180°C gesenkt werden, wobei die gleiche Viskosität wie beim Konkurrenzprodukt erhalten wurde.
Eine geringere Extrudertemperatur verringert den Energieeinsatz und senkt die Kosten. Mechanische Untersuchung von PVC-Kompositen

**Tabelle: Mechanische Kennwerte von PVC-U-Profilen**

| | Zugversuch | | | Schlagzähigkeiten | |
|---|---|---|---|---|---|
| Proben-Nummer | σ_{M} | ε_{M} | E_{I} | a_{cU-20} | a_{cA+23} |
| | [MPa] | [%] | [MPa] | [kJ/m²] | [kJ/m²] |
| CaZn-Standard | 47,1 | 2,9 | 2884 | NB | 14,6 |
| KKS 16 | 45,8 | 3,2 | 2878 | NB | 16,7 |
| KKS 17 | 47,3 | 3,2 | 2964 | NB | 17,2 |

### NB: None Break

### Bestimmung der Säurekapazität

### pH-Meßgerät-Verfahren nach EN ISO 182-2: 1999

### Prinzip der Methode:

2 g der zu prüfenden Substanz befinden sich in einem Gasstrom (N2) und werden auf 200°C erhitzt. Das entstandene Chlorwasserstoffgas wird in einer 0,1 mol/l Natriumchloridlösung absorbiert, dadurch wird der pH-Wert der Lösung gesenkt. Zu Beginn der Messung hat die Lösung einen pH-Wert von 6, die Stabilitätszeit ts ist bei einem pH-Wert von 3,8 erreicht.

**Ergebnisse:**

| Probennummer | ts (min) |
|---|---|
| CaZn-Standard | 71 |
| KKS 16 | 77 |
| KKS 17 | 71 |

Die Säurekapazität des erfindungsgemäß herstellten Hydrotalcits ist gemäß den bestimmten ts-Werten mit dem CaZn-Standard und dem Sorbacid vergleichbar und führt zu ausreichend guten Ergebnissen.

## Patentansprüche

1. Verfahren zur Herstellung von nanoskaligen Hydrotalcit wobei jedes einzelne, primäre Hydrotalcit-Partikel gecoatet ist, mit dem Schritt des Inkontaktbringens i) einer Magnesium-Salzlösung mit ii) einer Aluminium-Salzlösung unter Bildung eines Reaktionsgemisches zur Fällung von gecoateten Hydrotalcit nach Zugabe von Natriumcarbonat und Natronlauge, **dadurch gekennzeichnet, dass** in mindestens eine der Lösungen i) oder ii) mindestens eine der folgenden Additive A und/oder B gegebenenfalls in Kombination mit dem Additiv C enthalten ist oder bei Inkontaktbringen von i) und ii) mindestens eines der folgenden Additive A und/oder B gegebenenfalls in Kombination mit dem Additiv C gleichzeitig mit dem sich aus i) und ii) ergebenen Reaktionsgemisch in Kontakt gebracht wird, wobei Additiv A ein Wachstumsinhibitor, Additiv B ein Dispergiermittel und Additiv C eine wässrige Fettsäurelösung, bevorzugt eine Stearatlösung, ist, wobei das Additiv A ein Wachstumsinhibitor mit mindestens zwei oder mehr anionischen Gruppen ist, wobei das Additiv B ein Dispergiermittel mit mindestens zwei oder mehr anionischen Gruppen ist.

2. Verfahren nach Anspruch 1 , wobei das Hydrotalcit als weiteres zweiwertiges Metall Zn²⁺ enthält.

3. Verfahren nach einem der vorherigen Ansprüche, wobei das Hydrotalcit als Anionen weiterhin Sulfat, Chlorid, Nitrat, oder deren Gemische enthält.

4. Verfahren nach Anspruch 1, zur Herstellung von Hydrotalcit der allgemeinen Formel Mg₆Al₂(OH)₁₆CO₃ 4H₂0.

5. Verfahren nach einem der vorherigen Ansprüche, **dadurch gekennzeichnet, dass** das Inkontaktbringen der Magnesium-Salzlösung mit der Aluminium-Salzlösung und der Natriumcarbonat/Natriumhydroxid-Lösung bei Temperaturen von 0 bis 90°C, bevorzugt oberhalb von 50°C bis 80°C erfolgt.

6. Verfahren nach einem der vorherigen Ansprüche, **dadurch gekennzeichnet, dass** mindestens ein Dispergiermittel B in der Reaktionsmischung vorliegt, bevorzugt in einer Menge von 0,1 bis 30 Mas% bezogen auf den Feststoffgehalt an Hydrotalcit.

7. Verfahren nach einem der vorherigen Ansprüche, wobei die Mischung einen Wachstumsinhibitor A in einer Menge von 0,1 bis 30 Mas% bezogen auf den Feststoffgehalt an Hydrotalcit in der Reaktionsmischung und/oder Additiv C in einer Menge von 0, 1 bis 10 Mas% bezogen auf den Feststoffgehalt an Hyclrotalcit, enthält.

8. Verfahren nach einem der vorherigen Ansprüche, zur Herstellung von nanoskaligen Hydrotalcit-Partikeln, wobei mindestens 90 % der einzelnen Partikel einen Durchmesser von < 100 nm aufweisen.

9. Gecoatete primäre, nanoskalige Hydrotalcit-Partikel erhältlich nach zumindest einem der Verfahren 1 bis 8, **dadurch gekennzeichnet; dass** mindestens 90 %, bevorzugt mindestens 95 %, besonders bevorzugt mindestens 99 % der Partikel einen Durchmesser <100 nm aufweisen.

10. Gecoatete primäre, nanoskalige Hydrotalcit-Partikel nach Anspruch 9, **dadurch gekennzeichnet, dass** die Partikel eine BET-Oberfläche von ≥ 50 m²/g aufweisen, insbesondere ≥ 70 m²/g.

11. Komposite enthaltend Hydrotalcit erhältlich nach einem der Verfahren 1 bis 8 oder gemäß Anspruch 9 oder 10, als Füllstoffe.

12. Komposite nach Anspruch 11 umfassend einen Kunststoff, insbesondere einen Kunststoff aus Polyvinylchlorid, und Hydrotalcit als Füllstoff.

13. Verfahren zur Herstellung von Kompositen, insbesondere durch Extrusionsverfahren, umfassend das Vermischen von Kunststoff, insbesondere Polyvinylchlorid mit Hydrotalcit, hergestellt nach einem der Ansprüche 1 bis 8 oder gemäß Anspruch 9 oder 10.

## Claims

1. Process for producing nanoscale hydrotalcite wherein each individual primary hydrotalcite particle is coated, comprising the step of contacting i) a magnesium salt solution with ii) an aluminium salt solution to form a reaction mixture for precipitation of coated hydrotalcite after addition of sodium carbonate and aqueous sodium hydroxide solution, **characterized in that** at least one of the solutions i) or ii) contains at least one of the following additives A and/or B optionally in combination with the additive C or during the contacting of i) and ii) at least one of the following additives A and/or B optionally in combination with the additive C is simultaneously contacted with the reaction mixture resulting from i) and ii), wherein additive A is a growth inhibitor, additive B is a dispersant and additive C is an aqueous fatty acid solution, preferably a stearate solution, wherein the additive A is a growth inhibitor comprising at least two or more anionic groups, wherein the additive B is a dispersant comprising at least two or more anionic groups.

2. Process according to Claim 1, wherein the hydrotalcite contains Zn²⁺ as a further divalent metal.

3. Process according to any of the preceding claims, wherein the hydrotalcite further contains sulfate, chloride, nitrate or mixtures thereof as anions.

4. Process according to Claim 1 for producing hydrotalcite of general formula Mg₆Al₂(OH)₁₆CO₃4H₂O.

5. Process according to any of the preceding claims, **characterized in that** the contacting of the magnesium salt solution with aluminum salt solution and the sodium carbonate/sodium hydroxide solution is carried out at temperatures of 0°C to 90°C, preferably above 50°C to 80°C.

6. Process according to any of the preceding claims, **characterized in that** at least one dispersant B is present in the reaction mixture, preferably in an amount of 0.1% to 30% by mass based on the solids content of hydrotalcite.

7. Process according to any of the preceding claims, wherein the mixture comprises a growth inhibitor A in an amount of 0.1% to 30% by mass based on the solids content of hydrotalcite in the reaction mixture and/or additive C in an amount of 0.1% to 10% by mass based on the solids content of hydrotalcite.

8. Process according to any of the preceding claims for producing nanoscale hydrotalcite particles, wherein at least 90% of the individual particles have a diameter of < 100 nm.

9. Coated primary nanoscale hydrotalcite particles obtainable by at least one of the processes 1 to 8, **characterized in that** at least 90%, preferably at least 95%, particularly preferably at least 99%, of the particles have a diameter of <100 nm.

10. Coated primary nanoscale hydrotalcite particles according to Claim 9, **characterized in that** the particles have a BET surface area of ≥ 50 m²/g, in particular ≥ 70 m²/g.

11. Composites containing hydrotalcite obtainable by any of processes 1 to 8 or according to Claim 9 or 10 as fillers.

12. Composites according to Claim 11 comprising a plastic, in particular a plastic composed of polyvinyl chloride and hydrotalcite as filler.

13. Process for producing composites, in particular by extrusion processes, comprising mixing plastic, in particular polyvinylchloride, with hydrotalcite produced according to any of Claims 1 to 8 or according to Claim 9 or 10.

## Revendications

1. Procédé de fabrication d'hydrotalcite nanométrique, chaque particule primaire d'hydrotalcite individuelle étant revêtue, comprenant l'étape de la mise en contact de i) une solution de sel de magnésium avec ii) une solution de sel d'aluminium avec formation d'un mélange réactionnel pour la précipitation d'hydrotalcite revêtu après ajout de carbonate de sodium et d'hydroxyde de sodium, **caractérisé en ce qu'**au moins un des additifs A et/ou B suivants, éventuellement en combinaison avec l'additif C, est contenu dans au moins une des solutions i) ou ii), ou au moins un des additifs A et/ou B suivants, éventuellement en combinaison avec l'additif C, est mis en contact simultanément avec le mélange réactionnel formé par i) et ii) lors de la mise en contact de i) et ii), l'additif A étant un inhibiteur de croissance, l'additif B étant un agent de dispersion et l'additif C étant une solution aqueuse d'acide gras, de préférence une solution de stéarate, l'additif A étant un inhibiteur de croissance contenant au moins deux ou davantage de groupes anioniques, l'additif B étant un agent de dispersion contenant au moins ou davantage de groupes anioniques.

2. Procédé selon la revendication 1, selon lequel l'hydrotalcite contient Zn²⁺ en tant que métal bivalent supplémentaire.

3. Procédé selon l'une quelconque des revendications précédentes, selon lequel l'hydrotalcite contient en outre un sulfate, un chlorure, un nitrate ou leurs mélanges en tant qu'anions.

4. Procédé selon la revendication 1, pour la fabrication d'hydrotalcite de la formule générale Mg₆Al₂(OH)₁₆CO₃4H₂O.

5. Procédé selon l'une quelconque des revendications précédentes, **caractérisé en ce que** la mise en contact de la solution de sel de magnésium avec la solution de sel d'aluminium et la solution de carbonate de sodium/hydroxyde de sodium a lieu à des températures de 0 à 90 °C, de préférence de plus de 50 °C à 80 °C.

6. Procédé selon l'une quelconque des revendications précédentes, **caractérisé en ce qu'**au moins un agent de dispersion B est présent dans le mélange réactionnel, de préférence en une quantité de 0,1 à 30 % en masse, par rapport à la teneur en solides d'hydrotalcite.

7. Procédé selon l'une quelconque des revendications précédentes, selon lequel le mélange contient un inhibiteur de croissance A en une quantité de 0,1 à 30 % en masse, par rapport à la teneur en solides d'hydrotalcite dans le mélange réactionnel, et/ou l'additif C en une quantité de 0,1 à 10 % en masse, par rapport à la teneur en solides d'hydrotalcite.

8. Procédé selon l'une quelconque des revendications précédentes, pour la fabrication de particules d'hydrotalcite nanométriques, au moins 90 % des particules individuelles présentant un diamètre < 100 nm.

9. Particules primaires d'hydrotalcite nanométriques revêtues, pouvant être obtenues par au moins un des procédés 1 à 8, **caractérisées en ce qu'**au moins 90 %, de préférence au moins 95 %, de manière particulièrement préférée au moins 99 % des particules présentent un diamètre < 100 nm.

10. Particules primaires d'hydrotalcite nanométriques revêtues selon la revendication 9, **caractérisées en ce que** les particules présentent une surface BET ≥ 50 m²/g, notamment ≥ 70 m²/g.

11. Composite contenant de l'hydrotalcite pouvant être obtenu selon l'un quelconque des procédés 1 à 8 ou selon la revendication 9 ou 10, en tant que charge.

12. Composite selon la revendication 11, comprenant une matière plastique, notamment une matière plastique à base de polychlorure de vinyle, et de l'hydrotalcite en tant que charge.

13. Procédé de fabrication de composites, notamment par des procédés d'extrusion, comprenant le mélange d'une matière plastique, notamment de polychlorure de vinyle, avec de l'hydrotalcite, fabriqué selon l'une quelconque des revendications 1 à 8 ou selon la revendication 9 ou 10.
